# EUROPEAN PATENT APPLICATION

(11) **EP 1 592 120 A2**
(43) Date of publication of application: **02.11.2005**
(21) Application number: 05103407.2
(22) Date of filing: 26.04.2005
(51) Int. Cl.: H02M 5/293

(54) **Apparatus for controlling the power used in required operating conditions that vary over time, particularly for supplying power to lighting systems**

(30) Priority: 27.04.2004 IT BO20040265
(71) Applicant: CONCHIGLIA S.P.A., I-42100 Reggio Emilia (IT)
(72) Inventor: Martinelli, Daniele, 42100, Reggio Emilia RE (IT)
(74) Representative: Modiano, Micaela Nadia

(57) **Abstract**

An apparatus for controlling the power used in required operating conditions that vary over time, particularly for supplying power to lighting systems, using solid-state technology and comprising an inverter unit (1) which, above a certain value of voltage and power drawn directly from the power supply line, supplies a high-frequency voltage, which is suitable to be applied to series transformers (2) and to be added to the line voltage in order to supply the load (6), and also comprising a voltage regulation and stabilization unit.

## Description

The present invention relates to an apparatus for controlling the power used in required operating conditions that vary over time, particularly for supplying power to single- or three-phase lighting systems (in the particular case, reference is made to three-phase systems, but the invention can extend its protection to single-phase devices).

It is known that certain electrical systems must work in operating conditions that vary over time, for example with a different duration and activation depending on the time of year and on ambient conditions and in a reduced mode after a certain time of night: it is also known that particularly for gas discharge lamps that have a prolonged transient mode, supply voltage variations must be modulated over time in order to improve their operation and extend their life.

Known power control devices usually operate in more or less steep steps and have components with moving contacts and/or with moving mechanical elements, such as for example sliding contacts between separate mechanical parts or electromechanical elements such as relays or contactors: the presence of moving contacts can lead to low reliability and short life of the machine and, if the voltage steps are broad, also of the lamps used.

The aim of the present invention is to obviate the cited drawbacks of the background art, by providing an apparatus for controlling the power used in required operating conditions that vary over time, particularly for supplying power to lighting systems, that does not have moving mechanical elements and operates continuously without having steps: in addition to this, the apparatus according to the invention allows a more precise reconstruction of the sinusoidal waveform during the step of adjustment and stabilization of the load supply voltage and an immediate response dynamics: the higher speed allows better control of transient phenomena.

Within this aim, an object of the present invention is to provide an apparatus that is simple, relatively easy to provide in practice, safe in use, effective in operation, and has a relatively low cost.

This aim and this and other objects that will become better apparent hereinafter are achieved by the present apparatus for controlling the power used in required operating conditions that vary over time, particularly for supplying power to lighting systems, characterized in that it uses solid-state technology and comprises an inverter unit which, above a certain value of voltage and power drawn directly from the power supply line, supplies a high-frequency voltage, which is suitable to be applied to series transformers and to be added to the line voltage in order to supply the load, and also comprises a voltage regulation and stabilization unit.

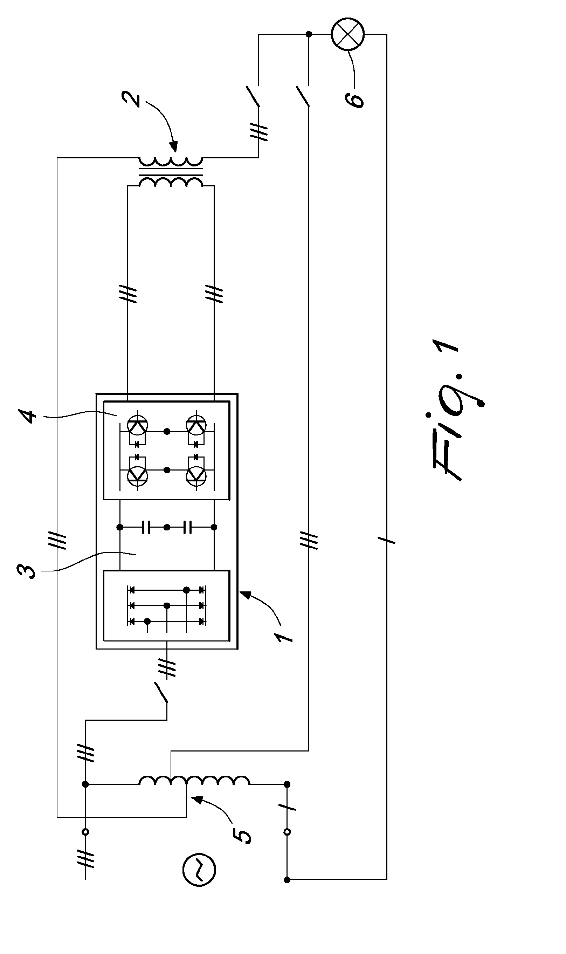

Further characteristics and advantages of the present invention will become better apparent from the following detailed description of a preferred but not exclusive embodiment of an apparatus for controlling the power used in required operating conditions that vary over time, particularly for supplying power to lighting systems according to the invention, illustrated by way of non-limiting example in the accompanying drawings, wherein Figure 1 is a block diagram of a system provided with the apparatus according to the invention.

With reference to the figure, the reference numeral 1 generally designates an apparatus for controlling the power used in required operating conditions that vary over time, particularly for supplying power to lighting systems according to the invention.

The apparatus uses solid-state technology, i.e., static components, and comprises an inverter unit 1 which, above a certain voltage and power value drawn directly from the power supply line, supplies a high-frequency voltage, which is suitable to be applied to series transformers 2 and to be added to the line voltage in order to supply the load 6, and also comprises a voltage regulation and stabilization unit.

The inverter 1 is a system with a high-frequency IGBT (Insulated Gate Bipolar Transistor) 4, which utilizes the pulse width modulation technique to regulate the output voltage and is suitable to set, at its output, three single-phase sinusoidal voltages with an amplitude that can vary from 0 to 75 VAC.

The three single-phase voltages are regulated independently in order to produce different reductions in the value and duration of the light flux on each phase.

The inverter is supplied by a current rectifier, which is suitable to convert the three-phase mains alternating current into direct current by means of a three-phase diode bridge, leveled by a capacitor 3, and then convert it back to alternating current by means of an IGBT bridge 4 with frequency and voltage values that can be set within preset parameters.

The operation of the invention is as follows: the apparatus, after the step for preheating the lamps, automatically configures itself to the regulation setting, preprogrammed by the user, and keeps the output voltage regulated by means of the static converter with integrated inverter, a unit with high-frequency IGBT that utilizes the pulse width modulation technique to regulate the output voltage.

The unit, which is fully static, is capable of setting at its output three single-phase sinusoidal voltages with variable phase and amplitude, and said voltages can be regulated independently to obtain different light flux variations on each phase in terms of value and duration. The apparatus stabilizes the output voltage, reconstructing a perfect sinusoid in phase with the input voltage and adding it to the transformed line voltage, keeping the output voltage under instantaneous control, with a higher stabilization speed than known devices, which allows better control of transient phenomena in input and in output from the apparatus.

Data checking occurs at preset time intervals; for example, a preferred solution provides intervals of 300 microseconds, allowing rapid stabilization of the voltage supplied to the lamps (all microvariations in voltage are compensated rapidly) and interfacing with the line in order to eliminate problems caused by voltage variations or by other phenomena of various kinds.

The inverter also monitors all the electrical parameters of the line, constantly checking the correctness of the values, and in case of anomaly the apparatus assumes a safe (bypass) configuration 5, in which the line is still supplied with a reduced voltage.

The inverter is capable of recovering, manually or automatically, in percentage terms, the power factor correction of the system deteriorated over time due to wear of the capacitors that are present in said system, with a consequent increase in the power factor and better utilization of said line. With respect to known solutions, there are lower energy losses and therefore the overall efficiency is higher.

Advantageously, the fact that the apparatus uses solid-state technology, i.e., that with respect to known types there are no electromechanical elements, such as moving elements and sliding contacts between separate parts, entails a considerable reduction in maintenance costs and extends the life of said apparatus.

Positively, the operation in bypass mode 5 of the apparatus provides a power supply that is lower than the mains supply (in any case capable of ensuring correct operation of the load), allowing an energy saving.

Moreover, the possibility to insert the control panel in the same cabinet as the apparatus allows conveniently to reduce space occupation.

It has thus been shown that the invention has achieved the intended aim and object.

The invention thus conceived is susceptible of numerous modifications and variations, all of which are within the scope of the inventive concept.

All the details may further be replaced with other technically equivalent ones.

In the embodiments shown, individual characteristics, given in relation to specific examples, may actually be interchanged with other different characteristics that exist in other embodiments.

Moreover, it is noted that anything found to be already known during the patenting process is understood not to be claimed and to be the subject of a disclaimer.

The embodiment of the present invention shall be carried out in the most scrupulous compliance with the statutory and regulatory provisions related to the products of the invention or correlated thereto and following any required authorization of the corresponding competent authorities, with particular reference to regulations related to safety, environmental pollution and health.

In practice, the materials used, as well as the shapes and dimensions, may be any according to requirements without thereby abandoning the scope of the appended claims.

The disclosures in Italian Patent Application No. BO2004 A000265 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus for controlling the power used in required operating conditions that vary over time, **characterized in that** it uses solid-state technology and comprises an inverter unit (1) which, above a certain value of voltage and power drawn directly from the power supply line, supplies a high-frequency voltage, which is suitable to be applied to series transformers (2) and to be added to the line voltage in order to supply the load (6), and also comprises a voltage regulation and stabilization unit.

2. The apparatus according to claim 1, **characterized in that** said inverter (1) is a system with high-frequency IGBT (Insulated Gate Bipolar Transistor) (4) that utilizes the pulse width modulation technique to regulate the output voltage.

3. The apparatus according to one or more of the preceding claims, **characterized in that** said inverter (1) is suitable for setting, at its output, three single-phase sinusoidal voltages with variable amplitude to the value required to regularize the system.

4. The apparatus according to one or more of the preceding claims, **characterized in that** said three single-phase voltages are suitable to be regulated independently to produce different reductions in the value and duration of the light flux on each phase.

5. The apparatus according to one or more of the preceding claims, **characterized in that** said inverter (1) is supplied by a current rectifier that is suitable to convert the three-phase mains alternating current into direct current by means of a three-phase diode bridge that is leveled by a capacitor (3) and to then convert it back to alternating current by means of an IGBT bridge (4) with frequency and voltage values that can be set within preset parameters.
